# EUROPÄISCHE PATENTSCHRIFT

(11) **EP 4 467 950 B1**
(45) Veröffentlichungstag und Bekanntmachung des Hinweises auf die Patenterteilung: **15.07.2026**
(21) Anmeldenummer: 24171893.1
(22) Anmeldetag: 23.04.2024
(51) Int. Cl.: G01L 5/00

(54) **VORRICHTUNG ZUM PRÜFEN EINER AUSZUGSFESTIGKEIT VON BEFESTIGUNGSELEMENTEN**
DEVICE FOR TESTING THE PULL-OUT RESISTANCE OF FASTENING ELEMENTS
DISPOSITIF POUR TESTER LA RÉSISTANCE À L'ARRACHEMENT D'ÉLÉMENTS DE FIXATION

(30) Priorität: 25.05.2023 DE 102023113802
(43) Veröffentlichungstag der Anmeldung: 27.11.2024
(73) Patentinhaber: LINDNER SE, 94424 Arnstorf (DE)
(72) Erfinder: Graf, Thomas, 94501 Aldersbach-Pörndorf (DE)
(74) Vertreter: Rings, Rolf

(56) Entgegenhaltungen:
- WO-A1-2012/069691
- DE-A1- 4 443 343
- US-A- 4 662 227
- US-B1- 9 360 397

## Beschreibung

Die vorliegende Erfindung betrifft eine Vorrichtung zum Prüfen einer Auszugsfestigkeit von Befestigungselementen, wie z. B. Dübeln oder anderen Elementen, welche in Wänden, Decken oder Böden von Gebäuden zur Montage von beispielsweise Deckenabhängungen oder Doppelbodensystemen eingesetzt werden.

Die vorliegende Erfindung bezieht sich insbesondere auf solche Prüfvorrichtungen für die Festigkeit von Befestigungselementen, bei welchen eine für die Montage vorgeschriebene Mindestprüflast eingehalten werden soll. Es ist im Bereich von derartigen Befestigungselementen von Gebäuden erforderlich, dass die durch Bohren und Einsetzen montierten Befestigungselemente auch auf ihre hinreichende Auszugsfestigkeit überprüft werden, bevor weitergehende Montagen von Elementen, wie z. B. abgehängten Decken oder anderen Bauelementen, erfolgen. Zu diesem Zweck wurden im Stand der Technik sogenannte Dübelprüfgeräte eingesetzt, welche mit einer Vorrichtung zur mehrpunktartigen Abstützung an der Decke oder Wand versehen sind, welche beispielsweise über eine spindelförmige Zugeinrichtung mit einem Messgerät für die momentan vorhandene Prüflast versehen ist. Solche Dübelprüfgeräte sind beispielsweise in der Form von einem mit mehreren Abstützungsständern versehenen Schraubspindelteil bisher realisiert worden. Die Schraubspindel ist mit einer mittigen Befestigungsöffnung zum Anbringen an einer Schraube oder einem anderen Befestigungselement und deren Fixierung zum Prüfen des Dübels versehen. Beim Anziehen der Schraubspindel nach Anbringung des Dübelprüfgeräts wird dann über das in der Spindel integrierte Messgerät, beispielsweise einen Ringkraftmesser, die Auszugsfestigkeit bestimmt. Bei hinreichender Festigkeit der Befestigungselemente gegen ein Ausziehen aus der Befestigungsstelle wird dann die Freigabe des Befestigungselements erteilt oder der Zustand dokumentiert.

Die im Stand der Technik bekannten Dübelprüfgeräte haben den Nachteil, dass sie relativ aufwendig in der Montage und Anbringung für die Prüfzwecke sind. Die Mehrpunktabstützung muss zunächst an der Stelle des Befestigungselements angebracht werden, und die Adapter für das Einsetzen in das Befestigungselement müssen dann mit der Schraubspindel-Messeinheit fest verbunden werden. Die Betätigung erfolgt durch ein Anziehen der Schraubspindel-Messeinheit. Hierzu muss sich der Bediener relativ nahe an der Stelle der Befestigungselemente selbst befinden, was beispielsweise im Bereich von hohen Decken zu der Schwierigkeit führt, dass ein extra Gerüst oder eine Leiter erforderlich ist.

Des Weiteren haben derartige bekannte Dübelprüfgeräte den Nachteil, dass sie nicht in einfacher Form eine Eichung bei der Prüfung der Auszugsfestigkeit erlauben. Bei jeder Anwendung muss vom Anwender sichergestellt werden, dass anhand des angezeigten Messwertes in der Messeinheit auch die tatsächlich jeweils geforderte minimale Auszugsprüflast erreicht wird. Nicht zuletzt haben derartige Dübelprüfgeräte den Nachteil, dass beispielsweise im Falle von Anbauten an die Befestigungselemente, wie z. B. Deckenabhängungen mit Längsprofilen, eine Anbringung der bekannten Prüfgeräte nur schwer möglich ist. Das heißt, die Befestigungselemente (Dübel etc.) müssen zunächst vor Anbringung der Abhängungselemente etc. an den Gebäudedecken einzeln aufwendig überprüft werden. Nicht zuletzt haben die bisherigen derartigen Dübelprüfgeräte den Nachteil, dass mit ihnen keine Überprüfbarkeit von vorgenommenen Messungen ohne separate händische Aufzeichnung durch den Nutzer gegeben ist.

Aus DE 44 43 343 A1 ist beispielsweise eine Hilfseinrichtung für sicherheitstechnische Überwachungen von Gerüstmontagen bekannt, bei welcher eine mit drei Beinen versehene Mauerstütze um eine Dübelmontage herum angebracht wird, die über eine Gewindeverbindung mit einer rohrförmigen Betätigungsstütze verbunden ist. In dem Inneren der rohrförmigen Betätigungsstütze ist ein Messwandler enthalten, der mit einem aus dem Rohr herausragenden Hakenelement an einen Zuganker, der in dem Befestigungselement eingeschraubt wird, verbunden werden kann. Nach Einstellung der Entfernung über das Gewinde wird mittels eines Hebels der im Inneren liegende elektromechanische Wandler betätigt, um die Zugfestigkeit mit einer entfernt davon vorgesehenen und über eine Datenleitung verbundenen Auswertungseinheit festzustellen. Die Anbringung, die Montage und die Betätigung beispielsweise auch im Deckenbereich sind für solch eine Vorrichtung recht kompliziert und zeitaufwendig.

Aus US 9,360,397 B1 ist ebenfalls eine Prüfvorrichtung für Befestigungsanker bekannt, die mit drei mit Gewindestangen gebildeten Abstützelementen um das Befestigungselement herum angebracht wird. Die drei Gewindestangen sind über zwei plattenförmige Zwischenhalterungen verbunden, und im mittleren Bereich ist eine Messvorrichtung vorhanden, die über zwei miteinander gelenkig verbundene Hakenelemente an dem zu testenden Befestigungselement eingehakt werden muss. Auch diese Vorrichtung erfordert eine Handhabung und Anbringung direkt an Ort und Stelle, so dass eine entfernt vom Befestigungselement vorgesehene Prüfung nicht möglich ist.

WO 2012/069691 A1 beschreibt eine Testanordnung mittels eines hydraulisch betätigten Aktuators an einem Ende der Grundplatte, während an dem gegenüberliegenden anderen freien Ende der Grundplatte eine mehrpunktförmige Abstützung mit Gewindestangen und Schraubmuttern montiert ist. Zwischen diesen ist mittels eines Drahtseils und Ösen die Verbindung an dem zu testenden Befestigungselement vorgesehen, so dass über die Hebelwirkung der Grundplatte bei Ausübung des hydraulischen Drucks an dem Druckelement die Messung der Festigkeit mittels des Drahtseils erfolgt. Auch diese Vorrichtung ist komplex im Aufbau, schwierig zu montieren und nicht für die schnelle und einfache Prüfung beispielsweise im Deckenbereich ohne zusätzliche Hilfsmittel wie Leitern, Gerüste etc. geeignet.

Vor diesem Hintergrund ist es die Aufgabe der vorliegenden Erfindung, eine Vorrichtung zum Prüfen einer Auszugsfestigkeit von Befestigungselementen an Gebäuden, wie z. B. Dübeln für Deckenabhängungen oder Wandsystemen, bereitzustellen, mit welcher eine schnellere und effektivere Überprüfung der Auszugsfähigkeit auch von Befestigungselementen in weiter entfernt liegenden oder schwer zugänglichen Bereichen ermöglicht wird. Die Anwendung der Vorrichtung soll für den Nutzer vereinfacht werden und die Sicherheit der Feststellung der ausreichenden Auszugsfestigkeit gewährleistet sein.

Diese Aufgabe wird mit einer Vorrichtung zum Prüfen einer Auszugsfestigkeit von Befestigungselementen gemäß Anspruch 1 gelöst. Vorteilhafte Ausgestaltungen und Weiterbildungen der Erfindung sind Gegenstand der abhängigen Ansprüche.

Erfindungsgemäß wird eine Vorrichtung zum Prüfen einer Auszugsfestigkeit von Befestigungselementen, insbesondere von Dübeln für Deckenabhängungen von Gebäuden oder ähnlichem, mit einem Zugelement zur lösbaren Anbringung auf Seiten der Abhängung oder des Befestigungselements und mit einem Stützelement zur Abstützung an einer Decke, Wand oder Boden eines Gebäudes vorgesehen, wobei das Zugelement und das Stützelement in einer Auszugsrichtung F des Befestigungselements relativ verstellbar zueinander gekoppelt sind und eine Messeinheit zum Messen einer Zugkraft auf das Befestigungselement anbringbar oder vorgesehen ist, wobei die Vorrichtung dadurch gekennzeichnet ist, dass das Zugelement und das Stützelement in Form von mindestens einem stangenförmigen Element mit einer Längsrichtung parallel zur Auszugsrichtung F und mit einem im Bereich des Befestigungselements angeordneten distalen Ende D und einem dazu gegenüberliegenden proximalen Ende P vorgesehen sind, dass am distalen Ende D eine aufsteckbare Prüfhalterung und eine einpunktförmige Abstützung vorgesehen sind und dass am proximalen Ende P ein Auslöseelement für eine vom Befestigungselement entfernte Prüfung durch einen Nutzer vorhanden ist.

Durch die Vorrichtung kann somit eine sichere Prüfung der Auszugsfestigkeit auch vom Boden her an einer Decke beispielsweise erfolgen. Das stangenförmige Element kann in einem Abstand von dem Befestigungselement und den Abhängungen durch den Nutzer einfach angesteckt oder eingeführt werden und mit dem Auslöseelement die Prüfung aktiviert werden. Eine Leiter oder ein Gerüst sind daher für solch eine Deckenabhängungsprüfung nicht mehr nötig. Viele verschiedene Dübel lassen sich so auf schnelle Art und Weise überprüfen und deren Auszugsfestigkeit dokumentieren.

Gemäß einem vorteilhaften Aspekt der Erfindung sind das Zugelement und das Stützelement parallel nebeneinanderliegend verlaufende stangenförmige Elemente mit einer Längsrichtung parallel zur Auszugsrichtung F und mit einem distalen und einem proximalen Ende, wobei am proximalen Ende ein jeweils gelenkig angebrachter Umlenkbügel quer zur Längsrichtung der stangenförmigen Elemente mit einem Anschluss oder Adapter für die Messeinheit oder einem Betätigungshebel für die vom Befestigungselement entfernte Prüfung durch den Nutzer vorgesehen ist. Die erfindungsgemäße Vorrichtung ist dadurch deutlich flexibler und einfacher als bisherige solche Prüfgeräte einsetzbar, insbesondere auch an schwer zugänglichen und weiter entfernten Stellen der Befestigungselemente. Beispielsweise an Decken, welche ansonsten nur mit einer Leiter oder einem Gerüst erreichbar waren. Mit der erfindungsgemäßen Vorrichtung kann die Auszugsfestigkeit der Befestigungselemente für die Abhängungen von Deckenelementen oder ähnlichem einfach und schnell auch an schwer zugänglichen Stellen in Gebäuden überprüft werden.

Der Nutzer kann die Vorrichtung mit dem Zugelement an den Abhängungen oder dem Befestigungselement selbst anbringen und durch gegenseitiges Verstellen der beiden stangenförmigen Elemente, nämlich des Zugelements und des Abstützelements, von deren proximalem Ende her, also vom Boden, die Überprüfung vornehmen. Mit der Vorrichtung nach der Erfindung ist es nicht erforderlich, eine beispielsweise durch Schrauben oder Stellklammern fixierte Anbringung des Zugelements direkt am Befestigungselement vorzunehmen. Auch kann in einem Arbeitsgang der Betätigung der Vorrichtung durch gegenseitige Verschiebung zwischen dem Zugelement und dem Stützelement eine direkte Markierung der Prüfstelle nach festgestellter ausreichender Festigkeit an dem Befestigungselement erfolgen, beispielsweise indem durch die relative Verschiebung automatisch oder durch extra Handhabung durch einen Bediener eine Markierung, beispielsweise eine Farbmarkierung, am distalen Ende direkt nahe an dem Befestigungselement angebracht wird.

Ferner hat die Erfindung den Vorteil, dass keinerlei extra Befestigung an einer Unterkonstruktion, wie z. B. bei klassischen Dübelprüfgeräten, mehr erforderlich ist. Durch einfaches Einhängen oder Einstecken eines Prüfadapters, beispielsweise eines in etwa C-förmigen Elements oder eines seitlich zur Längsrichtung der Vorrichtung vorragenden Bolzens, kann die lösbare Anbringung des Zugelements zum Prüfvorgang vorgenommen werden. Mittels des gelenkig an dem unteren, proximalen Ende der stangenförmigen Elemente angebrachten Umlenkbügels kann dann die Betätigung des Prüfvorgangs durch den Nutzer am Boden - also entfernt von der Prüfstelle - erfolgen. Dabei setzt der Nutzer eine Messeinheit oder einen Betätigungshebel ein, die an dem Umlenkbügel angebracht ist oder für den Prüfvorgang extra angebracht wird. Die Messeinheit oder der Betätigungshebel sind zum Aufbringen der Prüflast im Wesentlichen quer zur Auszugsrichtung F angeordnet. Hierfür weist die Vorrichtung entsprechende Adapter oder Anschlüsse für die Messeinheit, beispielsweise einen Drehmomentschlüssel, auf, mit welcher dann direkt die voreingestellte Prüflast von dem Nutzer überprüft und abgenommen werden kann. Alternativ kann die Messeinheit auch integriert am Umlenkbügel, an dem Zugelement oder dem Stützelement beispielsweise in Form einer definierten Zug- oder Druckfeder oder eines Drucksensors vorgesehen sein. Letzterer kann auch am proximalen Ende P in dem Stützelement integriert sein.

Die Vorrichtung der Erfindung eignet sich auch für eine elektrifizierte Ausführung des Prüfvorgangs. Die Messeinheit kann beispielsweise über eine Datenleitung kabelgebunden oder kabellos so gekoppelt werden, dass der jeweilige Messwert der erreichten Prüflast oder Auszugsfestigkeit des Befestigungselements für die jeweilige Stelle der Befestigungselemente überwacht werden kann. So lassen sich beispielsweise auch GPS-gestützte Prüfvorgänge und Daten des Prüfvorgangs aufzeichnen und für eine spätere Protokollierung und Archivierung der jeweiligen Prüfvorgänge weiterverwenden. Auch kann die Vorrichtung rein elektrisch mit einem Akku für die Messeinheit realisiert werden.

Durch das Einsetzen von lediglich stangenförmigen Elementen als Stützelement und Zugelement, welche parallel nebeneinanderliegend vorgesehen sind, ist die Vorrichtung auch relativ leicht und auch in schwer zugänglichen Bereichen einfach einzusetzen. Die Kopplung der stangenförmigen Elemente erfolgt mittels jeweiliger Anlenkung an dem proximalen Ende der stangenförmigen Elemente des Umlenkbügels, welcher dann mit der Messeinheit oder einem Hebel zur Betätigung versehen wird. Die Messeinheit kann direkt integriert am Bügel oder an anderer Stelle der Vorrichtung vorgesehen sein, die beim Anziehen des Zugelements dann automatisch aktiviert wird.

Gemäß einer vorteilhaften Ausgestaltung der Erfindung ist am distalen Ende des Stützelements eine einpunktförmige Abstützung in Form von vorzugsweise einem in der Länge einstellbaren Bolzen vorgesehen. Die Einpunktabstützung hat den Vorteil, dass nur ein einziger, neben der Stelle des Befestigungselements sich befindender Punkt für die Abstützung während des Prüfvorgangs erforderlich ist. Die seitlich auskragenden Mehrpunktabstützungen, wie z. B. die bei einem bekannten Tripod-Dübelprüfgerät vorhandenen schrägen drei Haltestützen, sind nicht mehr erforderlich, so dass die Vorrichtung insgesamt auch leichter gebaut ist als bisher. Auch wird weniger Platz seitlich von der Stelle der Befestigungselemente für den Prüfvorgang erfordert. Die Einpunktabstützung kann beispielsweise in Form eines Bolzens vorgesehen sein, der auch in der Länge oder im Abstand einstellbar ist. Eine solche, beispielsweise durch Verschraubung realisierte Einstellbarkeit hat den Vorteil, dass eine Feinjustierung des Abstands zwischen den zu messenden Deckenabhängungen und der Decke selbst leicht erfolgen kann. Der Punkt der Abstützung kann so für den Bedarfsfall genau eingestellt werden, indem der Bolzen in Art einer Feinjustierung von dem distalen Ende des stangenförmigen Stützelements weiter herein- oder herausgeschraubt wird. Alternativ kann auch das distale Ende des stangenförmigen Stützelements selbst direkt für die Abstützung an der Prüfstelle dienen.

Gemäß einer weiteren vorteilhaften Ausgestaltung der Erfindung weist das Zugelement am distalen Ende, also an dem auf der Seite des zu prüfenden Befestigungselements liegenden Ende, eine ohne separate Befestigungsmittel anbringbare oder aufsteckbare Prüfhalterung auf. Diese Prüfhalterung kann beispielsweise in Form eines Prüfbügels oder eines Prüfbolzens realisiert sein, welcher für die jeweilige Anbringung an die entsprechende Form der Abhängung oder der Anbauelemente an dem Befestigungselement angepasst ist. Damit kann das Befestigungselement selbst indirekt durch eine Zuglast auf die Deckenabhängung oder die Anbringungselemente an dem Befestigungselement geprüft werden und muss nicht direkt am Befestigungselement bzw. Dübel selbst erfolgen. Die Einsetzung und Abnahme vor und nach dem Prüfvorgang ist damit deutlich erleichtert gegenüber bisherigen mit Verschraubungen oder anderen Klemmhalterungen am Zugteil versehenen Dübelprüfgeräten.

Gemäß einer weiteren vorteilhaften Ausgestaltung der Erfindung sind die stangenförmigen Elemente zwischen dem distalen und dem proximalen Ende über Gleitführungen miteinander längsbeweglich verbunden. Während die beiden stangenförmigen Elemente, nämlich das Zugelement und das Stützelement, an ihrem unteren (proximalen) Ende gelenkig über einen Umlenkbügel mit entsprechenden Anlenkungsachsen gekoppelt sind, werden die Elemente in einem oberen Bereich beispielsweise nahe an dem distalen Ende über entsprechende Führungselemente in Form von Gleitführungen miteinander gekoppelt. Sie lassen sich dennoch relativ zueinander in der Längsrichtung verstellen, um die Betätigung der Lastprüfung zwischen dem Zugelement und dem Stützelement ausführen zu können. Eine solche Gleitführung kann beispielsweise auch auf drei Viertel der Höhe zwischen dem proximalen und dem distalen Ende der stangenförmigen Elemente in Form von ringförmigen Führungen oder einem mittleren Abschnitt vorgesehen sein. Auch können Gleitführungen in Form von Hülsen, die miteinander fest verbunden sind, vorgesehen werden. Auf diese Weise bleibt die Vorrichtung weiterhin relativ leicht und ermöglicht auch über eine größere Distanz eine effektive Prüfung der Auszugsfestigkeit von Befestigungselementen bzw. von Deckenabhängungen, die mit Befestigungselementen fixiert sind. Solche Gleitführungen können auch als einfache Führungsringe mit einer stabförmigen Verbindung realisiert sein, wobei die Fixierung auf der entsprechenden Höhe an einem der Elemente gewährleistet sein muss.

Gemäß einer weiteren vorteilhaften Ausgestaltung der Erfindung ist als eine Messeinheit für die Prüfung der Auszugsfestigkeit ein Drehmomentschlüssel oder eine Federwaage mit einem Anschluss für eine lösbare Anbringung insbesondere am Umlenkbügel oder an einem Adapter des Umlenkbügels vorgesehen. Es kann somit flexibel wahlweise die entsprechend geeignete Messeinheit eingesetzt werden. Die Messeinheit wird einfach an der Seite des Zugelements am Umlenkbügel angebracht. Je nach erforderlichen Kräften kann die passende Messeinheit ausgewählt, eingestellt und eingesetzt werden. Die Messeinheit kann anschließend für andere Verwendungen weiterbenutzt werden, und die Vorrichtung ist nicht auf eine spezielle Form einer Messeinheit beschränkt. Eine Federwaage kann ebenso wie ein Drehmomentschlüssel oder eine Kraftmesseinrichtung eingesetzt werden. Die Einsatzmöglichkeiten und die Variabilität der Vorrichtung nach der Erfindung sind damit relativ groß.

Gemäß einer weiteren vorteilhaften Ausgestaltung der Erfindung sind/ist das Zugelement und/oder das Stützelement in der Länge einstellbar ausgebildet. Auf diese Weise kann die Vorrichtung an unterschiedliche Deckenhöhen von Gebäuden oder Entfernungen von vertikalen Wandapplikationen von Befestigungselementen eingestellt werden. Die Einstellung der Länge der stangenförmigen Elemente, nämlich des Zugelements und des Stützelements, kann dabei auch zur Anpassung des relativen Abstands zwischen einer Decke, an welcher das Befestigungselement angebracht ist, und einer Abhängung verwendet werden. Eine Längenverstellbarkeit der stangenförmigen Elemente kann über jede dem Fachmann hierfür bekannte Form realisiert sein. Eine bevorzugte Form sind sogenannte Teleskopstangen, mit welchen die einzelnen stangenförmigen Elemente in der Länge variabel eingestellt und in der gewünschten Einstellung sicher fixiert werden können.

Gemäß einer weiteren vorteilhaften Ausgestaltung der Erfindung ist als Prüfhalterung oder Prüfadapter eine zur Außenseite hin seitlich offene, im Wesentlichen C-förmige Aufnahme vorgesehen. Eine solche nach außen hin offene C-Aufnahme am Zugelement erlaubt das einfache Einstecken von der Seite her auch bei in der Höhe relativ entfernten Deckenabhängungen. Gleiches gilt für entfernt liegende Prüfstellen im Boden- oder Wandbereich. Nach dem Einsetzen oder Anbringen der C-förmigen Prüfhalterung kann anschließend durch die Einpunktabstützung des Stützelements die Messung der Auszugsfestigkeit sicher erfolgen, indem das eingehängte Zugelement im Verhältnis zum Stützelement in Auszugsrichtung F mittels einer Messeinheit durch den Benutzer gezogen und betätigt wird. Bei Erreichen der voreingestellten Auszugskraft kann der Drehmomentschlüssel entsprechend durchrasten. Bei einer Federwaage kann durch den Nutzer bei Erreichen der erforderlichen Auszugskraft diese abgelesen und mit einem Vermerk entweder von Hand oder automatisch an der Stelle des Befestigungselements notiert oder markiert werden. Mit der Erfindung lässt sich so auch ohne ein Gerüst oder eine Leiter von der entfernten Stelle am Boden eine Vielzahl von Befestigungspunkten beispielsweise einer großflächigen Deckenabhängung in einem Gebäude kontrollieren, überprüfen und dokumentieren, was die korrekte Anbringung der Befestigungselemente und die hinreichende Auszugsfestigkeit jedes Punktes betrifft. Mit der Erfindung ist so eine viel schnellere Überprüfung der einzelnen Dübel oder Befestigungselemente an Decken von Gebäuden oder Wänden oder aber auch im Bodenbereich beispielsweise bei Doppelböden möglich.

Gemäß einer weiteren vorteilhaften Ausgestaltung der Erfindung ist am distalen Ende des Stützelements, also im Bereich des Befestigungselements selbst, ein Markierungsmittel für eine Anbringung einer Prüfmarkierung an der Decke oder an der Wand bzw. dem Boden vorgesehen, welches insbesondere vom proximalen Ende her nach erfolgter positiver Prüfung vom Benutzer betätigbar ist. Auch eine automatische Betätigung des Markierungsmittels ist denkbar, wenn beispielsweise ein Drehmomentschlüssel mit maximaler Durchrastung mit dem Markierungsmittel über einen Seilzug oder ähnliches gekoppelt ist. Auf diese Weise lässt sich nicht nur die Auszugsfestigkeit der Befestigungselemente an dem Befestigungselement selbst, sondern auch an einer daran angebrachten Abhängung leicht überprüfen. Auch eine direkte Dokumentation und Markierung einer erfolgreichen Prüfung oder auch einer nichterfolgreichen Prüfung der Befestigungsstellen im Gebäude kann direkt im gleichen Arbeitsschritt erfolgen. Eine Prüfmarkierung kann beispielsweise über eine Farbspraydose erfolgen, die an einer Halterung, einem Spannbügel oder einem Schnellspanner an dem Stützelement am distalen Ende, also nahe bei und seitlich von dem oberen Ende des Stützelements, angebracht wird. Die Auslösung zur Markierung kann über ein davon entfernt am proximalen Ende vorgesehenes Befestigungselement realisiert werden, beispielsweise in Form eines Seilzugs mit einer Handhabung oder auch in Form eines elektrischen Auslöseknopfs, wenn eine elektrische Markierung implementiert ist.

Gemäß einer weiteren vorteilhaften Ausgestaltung der Erfindung ist die Messeinheit direkt integriert oder indirekt über den Adapter lösbar gekoppelt vorgesehen. So kann die Messeinheit auch ein rein elektrischer Sensor sein. Oder sie kann als definierte Druckfeder am Stützelement oder Zugfeder am Zugelement integriert mit eingebaut sein.

Gemäß einer weiteren vorteilhaften Ausgestaltung der Erfindung ist die Messeinheit im Bereich des distalen Endes D integriert am Stützelement vorgesehen. Sie kann zum Beispiel als Drucksensor integriert zwischen einem Bolzen als Abstützung an der Wand oder Decke und dem distalen Ende D des Stützelements vorgesehen werden. Auch eine rein mechanische Variante der Messeinheit in diesem Bereich in Form einer definierten Druckfeder ist in dieser Form realisierbar.

Gemäß einer weiteren vorteilhaften Ausgestaltung der Erfindung sind das Zugelement und das Stützelement als eine elektrisch aktivierbare kombinierte Einheit realisiert. Die Vorrichtung kann mit einem einzigen stangenförmigen Element versehen sein. Am unteren, proximalen Ende P befindet sich ein Auslöseelement für die Aktivierung der Prüfung durch den Nutzer. Am oberen, distalen Ende der Stange sind eine Prüfhalterung zum Einhängen an der Deckenabhängung oder dem Dübel sowie eine elektrisch ausfahrbare Abstützung deckenseitig vorgesehen, welche integriert einen Druck-/Zugmesssensor aufweist.

Weitere vorteilhafte Ausgestaltungen, Merkmale und Aspekte der vorliegenden Erfindung werden im Folgenden mehr im Detail anhand von mehreren Ausführungsbeispielen im Zusammenhang mit den beigefügten Zeichnungen erläutert werden. In den Zeichnungen zeigen:
- Fig. 1: eine Seitenansicht eines ersten Ausführungsbeispiels einer erfindungsgemäßen Vorrichtung zum Prüfen einer Auszugsfestigkeit im Anwendungsfall an einer Deckenabhängung; und
- Fig. 2: eine Seitenansicht eines zweiten Ausführungsbeispiels einer erfindungsgemäßen Vorrichtung zum Prüfen einer Auszugsfestigkeit im Anwendungsfall an einer Deckenabhängung mit längenverstellbaren stangenförmigen Elementen und mit Markierungsmittel für die Prüfstelle.

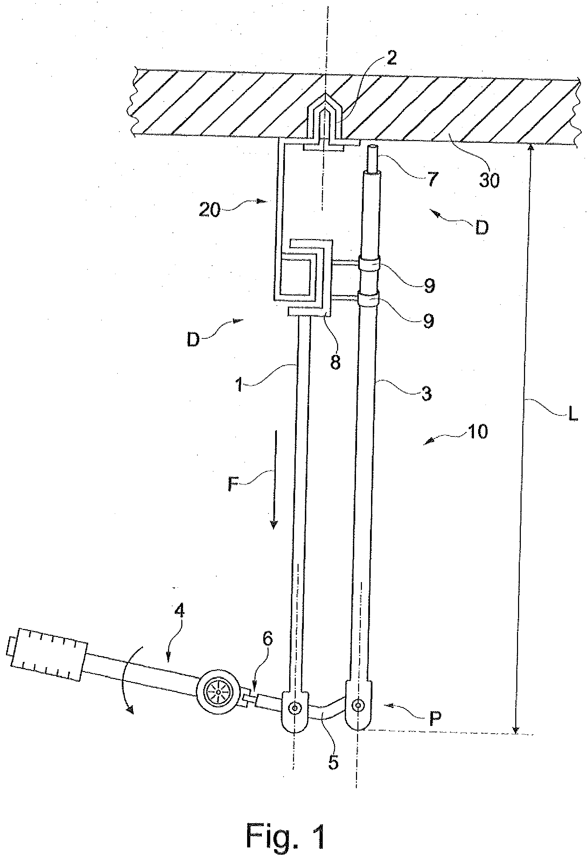

Die erfindungsgemäße Vorrichtung 10 zum Überprüfen der Auszugsfestigkeit und Belastbarkeit von Befestigungselementen 2 oder Abhängungen 20 an Befestigungselementen 2 weist gemäß der ersten Ausführungsform, welche in der Fig. 1 gezeigt ist, ein Zugelement 1 für eine auch von der Ferne lösbare Anbringung auf Seiten einer Abhängung 20 oder des Befestigungselements 2 auf, welches mit einem parallel dazu angeordneten stangenförmigen Stützelement 3 gekoppelt ist. Das stangenförmige Zugelement 1 ist an seinem distalen Ende D mit einer Prüfhalterung 8 versehen, welche zum einfachen seitlichen Einhängen oder Aufstecken auf eine Deckenabhängung 20 angepasst ist. Parallel zu dem stangenförmigen Zugelement 1 ist ein ebenfalls stangenförmig ausgebildetes Stützelement 3 vorgesehen, welches an dem proximalen Ende P gelenkig mit dem Zugelement 1 über einen Umlenkbügel 5 verbunden ist. Die beiden stangenförmigen Elemente 1, 3, nämlich das Zugelement 1 und das Stützelement 3, sind neben der gelenkigen Kopplung am Umlenkbügel 5 über Führungen 9, welche beispielsweise in Form von Gleitführungen ausgebildet sind, an einem Bereich zwischen dem distalen Ende D und dem proximalen Ende P der stangenförmigen Elemente 1, 3 miteinander beweglich zusätzlich verbunden. Am Umlenkbügel 5 am unteren Ende bzw. proximalen Ende der Vorrichtung 10 ist ein Anschluss oder Adapter 6 für die Anbringung einer Messeinheit 4 für die Messung der ausgeübten und zulässigen Haltekraft oder geforderten Auszugskraft des Befestigungselements 2 vorgesehen.

Die Messeinheit 4 ist bei dem in Fig. 1 gezeigten Ausführungsbeispiel ein separater Drehmomentschlüssel, welcher über einen entsprechenden Adapter oder Anschluss an dem Adapter 6 am Umlenkbügel 5 angebracht werden kann. Bei Ausübung einer Kraft an dem Drehmomentschlüssel, welcher als Messeinheit 4 dient, wird das stangenförmige Zugelement 1 in Richtung der Auszugskraft F bzw. Auszugsrichtung belastet, wie mit dem Pfeil in Fig. 1 dargestellt. Aufgrund der Abstützung durch das stangenförmige Stützelement 3 und der am distalen Ende D sich befindenden einpunktförmigen Abstützung 7 an der Decke 30 wird die mit der Betätigung der Messeinheit 4 aufgebrachte Kraft auf die Deckenabhängung 20 und damit auf das Befestigungselement 2 ausgeübt. Hiermit lässt sich zum einen eine momentane Auszugskraft, welcher das Befestigungselement 2 standhält, messen. Zum anderen kann bei Einstellung des maximalen Drehmoments am Drehmomentschlüssel als Messeinheit 4 hier die erforderliche minimale Auszugskraft in geeichter Form geprüft werden. Bei Erreichen der Prüflast wird die Messeinheit 4 überdreht, so dass der Nutzer weiß, dass eine hinreichende Festigkeit gegeben ist, und dann kann eine Markierung der Messstelle an dem Befestigungselement 2 oder neben dem Befestigungselement 2 anschließend vorgenommen werden, um zu kennzeichnen, dass die Befestigungsstelle der Abhängung 20 an dem jeweils geprüften Punkt des Befestigungselements 2 eine hinreichende vorgegebene Zugfestigkeit aufweist.

Bei dem ersten Ausführungsbeispiel nach der Fig. 1 ist an dem oberen Ende des stangenförmigen Zugelements 1 als eine Prüfhalterung 8 eine im Querschnitt im Wesentlichen C-förmige Aufnahme vorgesehen, welche nach außen hin von der Vorrichtung 10 die Öffnung aufweist. Damit lässt sich die Vorrichtung 10 seitlich an Trägern etc. einfach einhängen für den Prüfvorgang. Alternativ können andere Prüfhalterungen 8 eingesetzt werden. Beispielsweise kann anstatt des C-förmigen Bügels ein quer zur Längsrichtung der stangenförmigen Elemente 1, 3 vorragender Bolzen oder Haltestift vorgesehen sein, falls eine Abhängung 20 oder ein Befestigungselement 2 eine entsprechende Öffnung wie ein Durchgangsloch oder Langloch hat, in welchem die Vorrichtung 10 ohne separate Befestigungsmittel einfach auch von der Ferne her eingehängt oder angebracht werden kann. Es ist auch denkbar, als eine Prüfhalterung 8 am distalen Ende D des Zugelements 1 eine Kombination von einem Einhängbügel und einem vorragenden Einsteckstift vorzusehen, solange die Festigkeit für das Übertragen der Zugkraft für den Prüfvorgang in Richtung der Auszugsrichtung F (vgl. Pfeil F in Fig. 1) bei verschiedenen Anwendungsfällen gleichermaßen ohne Wechsel des Prüfelements am Zugelement 1 ermöglicht wird. An dem distalen Ende D des Stützelements 3, welches stangenförmig ist und parallel seitlich leicht versetzt zu dem Zugelement 1 der Vorrichtung 10 verläuft, ist in diesem Ausführungsbeispiel der Fig. 1 eine einpunktförmige Abstützung 7 vorgesehen. Die einpunktförmige Abstützung 7 kann als einfaches Ende des stangenförmigen Stützelements 3 realisiert sein. Bei dem gezeigten Beispiel ist als Abstützung 7 ein in der Längsrichtung justierbarer, vorragender Stift vorhanden, mit welchem noch eine Feinjustierung durch Drehen des mit einem Gewinde montierten Stifts und damit eine Verstellung des tatsächlichen Abstands zwischen der Decke 30 und dem Element der Deckenabhängung 20 erreicht wird. Mit dieser Maßnahme kann eine noch genauere Einstellung auf die entsprechenden Messsituationen der jeweiligen Abhängungen 20 oder Deckenelemente erfolgen. Die Vorrichtung 10 weist insgesamt eine Länge L auf, mit welcher die gängigen Entfernungen zwischen Boden und Decke von Gebäuderäumen überbrückt werden können.

Die Erfindung ist nicht auf die Anwendung einer Prüfung der Auszugsfestigkeit von Befestigungselementen 2 im Bereich von Decken 30 oder Abhängungen 20 an Decken 30 beschränkt. Sie kann auch gleichermaßen an Wandbefestigungselementen 2 oder an Befestigungselementen 2, welche im Bereich von Böden, beispielsweise im Bereich von Doppelböden, montiert sind, eingesetzt werden. Auch hier ergeben sich die erfindungsgemäßen Vorteile einer in einer gewissen Distanz, d. h. im Abstand zu der eigentlichen Prüfstelle, ermöglichten Auszugsfestigkeitsprüfung und des geringen Platzbedarfs an der Prüfstelle. Durch die in der Länge sich erstreckenden, parallel verlaufenden stangenförmigen Elemente 1, 3 der Vorrichtung 10 lässt sich eine sichere Prüfung der Auszugsfestigkeit und Prüflast einfach erreichen. Auch wenn die Vorrichtung selbst nicht direkt an der Stelle der Befestigungselemente 2 von Hand angebracht und fixiert werden muss, wie es im Stand der Technik notwendig war, lassen sich so die erforderlichen Festigkeitsprüfungen und die Dokumentation der Prüfungen leicht und schnell durchführen.

Das stangenförmige Zugelement 1 und das parallel dazu verlaufende stangenförmige Stützelement 3 sind bei diesem Ausführungsbeispiel der Fig. 1 als einfache Stangen mit Anlenkungspunkten bzw. Gelenkachsen auf Seiten des Umlenkbügels 5 am proximalen Ende vorgesehen. Alternativ können die stangenförmigen Elemente 1, 3 auch in der Länge L einzeln verstellbar oder eines von beiden einzeln in der Länge L verstellbar vorgesehen werden, um eine Anpassung an die jeweilige Höhe der Decke 30 bzw. der Prüfstelle (Wand, Boden etc.) oder den Abstand zwischen der Decke 30 und dem Element der Deckenabhängung 20, an welchem der Prüfbügel 8 eingesetzt und eingehakt wird, zu ermöglichen. Somit wäre dann eine relative Verstellbarkeit zwischen der Position des Prüfbügels 8 und der Abstützung 7 am Stützelement 3 möglich. Gleichermaßen wäre bei einer Verstellmöglichkeit der Länge L der Vorrichtung 10 an beiden stangenförmigen Elementen 1, 3 auch eine Anpassung an die entsprechende Deckenhöhe oder Entfernung zur Prüfstelle leicht zu bewerkstelligen.

Anstatt einer als Drehmomentschlüssel ausgebildeten Messeinheit 4 für die Messung der Auszugsfestigkeit und Prüflast in Auszugsrichtung F hinsichtlich des Befestigungselements 2 könnte auch eine andere Messeinheit 4 eingesetzt werden, wie z. B. eine Federwaage, bei welcher durch ein Ziehen in Auszugsrichtung F die erreichte maximale Prüflast oder die geforderte minimale im Toleranzbereich liegende Auszugsfestigkeit des Befestigungselements 2 überprüft wird. Weiter alternativ könnte als Messeinheit 4 auch ein elektrifiziertes oder digitales Messinstrument eingesetzt werden. Durch solch eine Form würden die Dokumentation und die Protokollierung des Prüfvorgangs weiter erleichtert werden. Es könnte beispielsweise drahtlos oder drahtgebunden eine Übertragung der entsprechenden Messwerte an eine zentrale Steuerung oder Datenbank erfolgen. Auch eine Kombination mit einem GPS-System zur genauen Lokalisierung des jeweils gemessenen Prüfpunktes des Befestigungselements 2 an einer Decke 30, einer Wand oder einem Boden wäre so realisierbar. Schließlich kann die Messeinheit 4 auch anders als mit einem Adapter 6 an dem proximalen Ende P des Zugelements 1 bzw. dem Umlenkbügel 5 angebracht werden. Es ist möglich, die Messeinheit 4 auch direkt entweder im Umlenkbügel 5 oder in dem stangenförmigen Zugelement zu integrieren. Bei solch einer Konstruktion wäre dann die Vorrichtung 10 noch kompakter aufgebaut, und eine Handhabung oder Betätigung könnte entweder über das Zugelement 1 selbst oder über ein daran seitlich angebrachtes Griffelement oder ähnliches realisiert sein.

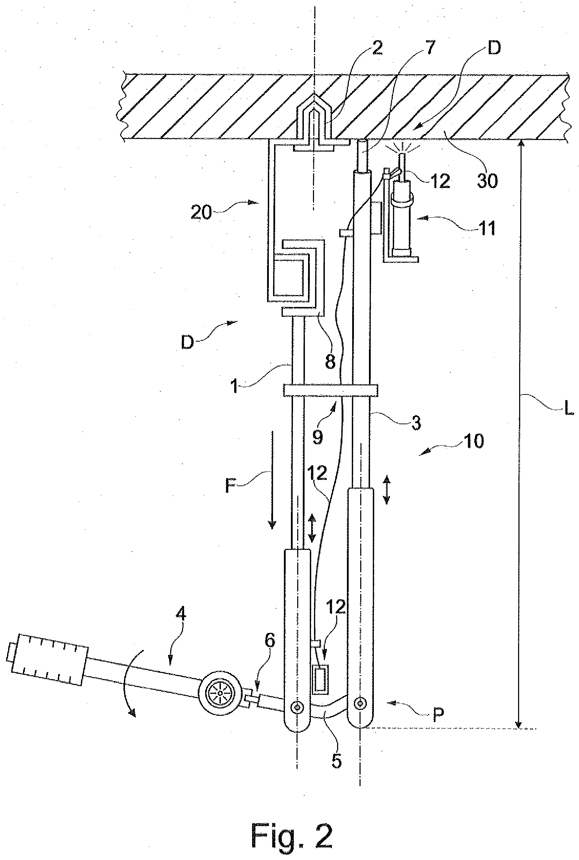

In der Fig. 2 ist ein zweites Ausführungsbeispiel einer erfindungsgemäßen Prüfvorrichtung 10 für die Bestimmung der Auszugsfestigkeit von Befestigungselementen 2 am Beispiel einer Deckenabhängung 20 in einer schematischen Seitenansicht dargestellt. Ähnlich wie bei dem ersten, oben im Zusammenhang mit der Fig. 1 beschriebenen Ausführungsbeispiel hat die Vorrichtung 10 einen insgesamt länglichen Aufbau bestehend aus einem Zugelement 1 in einer stangenförmigen Ausgestaltung sowie einem parallel dazu verlaufenden stangenförmigen Stützelement 3, wobei die Elemente 1, 3 über einen Umlenkbügel 5 am proximalen Ende der Vorrichtung 10 über entsprechende Achsen miteinander gelenkig gekoppelt sind. Ferner sind die stangenförmigen Elemente 1, 3, nämlich das Zugelement 1 und das Stützelement 3, bei diesem Beispiel in einem mittleren Bereich über Gleitführungen 9 so gekoppelt, dass sie nach Art eines Parallelogramms zum Aufbringen von seitlich abgestützten Zugkräften auf das Befestigungselement 2 bzw. das mit dem Befestigungselement 2 angebrachte Abhängungselement der Deckenabhängung 20 geeignet sind. Zu diesem Zweck wird bei dem in Fig. 2 gezeigten Ausführungsbeispiel das Stützelement 3 mit der Abstützung 7 an der Decke direkt neben dem Befestigungselement 2 angesetzt, und ein Prüfbügel 8 oder ein anderes als Prüfhalterung dienendes Element wird an einem Querträger der Deckenabhängung 20 von unten, d. h. vom Boden her, durch den Nutzer von der Seite her eingehängt. Wenn die Vorrichtung 10 so an der Deckenabhängung 20 lösbar angebracht ist, wird eine entsprechende Zugkraft zum Prüfen der Auszugsfestigkeit von dem Befestigungselement 2 auf die Deckenabhängung 20 aufgebracht, indem ein Messgerät 4, welches an dem Umlenkbügel 5 angebracht ist, in Richtung des Pfeils, also in Auszugsrichtung F, betätigt wird. Dabei wird das Auszugsmoment bzw. die Auszugskraft, welcher das Deckenelement 2 standzuhalten hat, gemessen und protokolliert.

Die Messeinheit 4 ist auch bei diesem zweiten Ausführungsbeispiel der Erfindung in Form eines Drehmomentschlüssels dargestellt, der über einen Anschluss oder Adapter 6 an dem Umlenkbügel 5 seitlich, d. h. im Wesentlichen quer zur Längsrichtung 10, angebracht werden kann. Die Messeinheit 4 kann eine andere Form und eine andere Integrierung in die Vorrichtung 10 aufweisen: Beispielsweise kann ein elektronischer Kraftmesser in dem stangenförmigen Zugelement 1 integriert vorgesehen sein, so dass eine digitale Weiterverwendung von Messdaten möglich ist. Auch lassen sich andere mechanische oder mechanisch-elektronische Messeinheiten 4 an der Vorrichtung 10 im Bereich des Umlenkbügels 5 oder am Zugelement 1 an deren proximalem Ende P vorsehen.

Im Unterschied zum ersten Ausführungsbeispiel ist bei dem zweiten Ausführungsbeispiel das stangenförmige Zugelement 1 in der Länge L verstellbar ausgeführt. Zu diesem Zweck ist das stangenförmige Zugelement 1 in Form einer Teleskopstange vorgesehen, welche in der Länge so verstellt werden kann, dass die effektive Länge L der Vorrichtung 10 von deren proximalem Ende P bis zum distalen Ende D, d. h. der Abstand zur Decke 30 bzw. Prüfstelle an Wand oder Boden, variabel eingestellt werden kann. Hiermit lassen sich Anpassungen auf unterschiedliche Deckenhöhen der Decken 30 oder Deckenabhängungen 20 variabel einstellen. Auch kann so ein Abstand zwischen der Prüfhalterung 8 und der einpunktförmigen Abstützung 7 verändert werden. In der in Fig. 2 dargestellten Ausführungsform ist sowohl das stangenförmige Zugelement 1 als auch das stangenförmige, parallel dazu verlaufende Stützelement 2 in der Länge L verstellbar gebildet über sogenannte Teleskopstangen. Andere Formen der Längenverstellung zur Einstellung der tatsächlichen Deckenhöhe in der jeweiligen Anwendung für die stangenförmigen Elemente 1, 3 sind ebenso im Rahmen der Erfindung realisierbar. Eine Längenverstellbarkeit nur des Stützelements 3 ist ebenso möglich.

Als weiterer Unterschied zu dem ersten Ausführungsbeispiel ist bei dem zweiten, in der Fig. 2 dargestellten Ausführungsbeispiel noch ein Markierungsmittel 11 vorhanden, welches in Form einer Farbmarkierung oder Sprühdose an dem proximalen Ende P des stangenförmigen Abstützelements 3 angebracht ist. Dafür ist für das Markierungsmittel 11 eine Aufnahme mit beispielsweise einer lösbaren Halterung oder Klemmhalterung für eine Sprühdose oder ähnlichem vorgesehen, und als ein Auslöseelement 12 des Markierungsmittels 11 ist hier ein Bowdenzug oder Seilzug vorgesehen. An einem unteren proximalen Ende P kann der Seilzug als Auslöseelement 12 von dem Nutzer betätigt werden, um die Farbmarkierung seitlich von dem Befestigungselement 2 anzubringen nach erfolgreicher Prüfung der geforderten oder minimal notwendigen Auszugsfestigkeit über die Messeinheit 4 in Form des Drehmomentschlüssels. Nach dem Betätigen der Messeinheit 4 und Feststellen der hinreichenden Auszugsfestigkeit des Befestigungselements 2 für die Deckenabhängung 20 kann so der Nutzer der Prüfvorrichtung 10 das Auslöseelement 12 für das Markierungsmittel 11 direkt betätigen. Anschließend kann die Vorrichtung 10 für weitere Prüfungen an anderen Stellen an der Gebäudedecke 30 analog eingesetzt werden. Die Prüfung und die Markierung können daher quasi in einem Vorgang durchgeführt werden. Auch können die Auslösung des Markierungsmittels 12 und der Prüfvorgang mittels der Messeinheit 4 direkt kombiniert werden, indem beispielsweise ein Auslöseelement 12 für das Markierungsmittel 11 verwendet wird, das mit einem Drehmomentschlüssel gekoppelt ist oder mit einer anderen, beispielsweise auch elektrifizierten Messeinheit 4 gekoppelt ist.

Auch bei diesem zweiten Ausführungsbeispiel kann anstatt der als Prüfbügel in einer C-förmigen Ausgestaltung ausgeführten Prüfhalterung 8 eine andere Form einer ohne zusätzliche Befestigungsmittel oder Werkzeuge einhängbaren Prüfadapterform realisiert sein. Solange das am distalen Ende D des Zugelements 1 angebrachte Anschlusselement eine einfach einhängbare und von der Ferne ansetzbare Form hat, kann es an entsprechende Formen der Deckenabhängungen 20 oder des Befestigungselements 2 selbst an der Decke oder anderen Gebäudeteilen fixiert werden. Auch bei diesem zweiten Ausführungsbeispiel der Fig. 2 ist an dem distalen Ende D des stangenförmigen Abstützelements 3 ein in der Länge einstellbarer Bolzen als einpunktförmige Abstützung 7 vorgesehen, damit eine Feineinstellung des Abstands zu der Prüfhalterung 8 und des Abstands der Deckenabhängung 20 von der eigentlichen Gebäudedecke 30 vorgenommen werden kann. Die Einstellbarkeit der Abstützung 7 kann auch weggelassen werden. Es kann auch einfach ein stangenförmiges Ende des Stützelements 3 für die einpunktförmige Abstützung 7 alternativ hergenommen werden. Auch bei dem zweiten Ausführungsbeispiel (Fig. 2) kann an dem unteren, proximalen Ende P der Vorrichtung 10 anstatt eines L-förmigen Umlenkbügels 5 eine andere gelenkige Verbindung der beiden stangenförmigen Elemente 1, 3 vorgesehen sein. Solange die Kraft zwischen dem stangenförmigen Zugelement 1 in Richtung der Auszugskraft F und die Kraft der Abstützung an der Decke 30 über das Stützelement 3 hinreichend übertragbar sind, können andere Elemente für die Kopplung zwischen den beiden stangenförmigen Elementen 1, 3 und zum Anbringen und Messen der Auszugsfestigkeit über die Vorrichtung 10 mittels der Messeinheit 4 vorgesehen sein.

Die erfindungsgemäße Vorrichtung 10 bietet sowohl gemäß dem ersten als auch gemäß dem zweiten Ausführungsbeispiel zahlreiche Vorteile gegenüber den bisher bekannten derartigen Prüfgeräten für die Auszugsfestigkeit von Dübeln. Es lässt sich ohne Notwendigkeit einer Leiter oder eines Gerüsts auch an entfernteren Stellen an Decken 30, Wänden oder auch im Bodenbereich von Gebäuden die Auszugsfestigkeit von Befestigungselementen 2 schnell und effektiv prüfen, protokollieren und auch gleichzeitig oder anschließend markieren. Eine Verschraubung oder anders gestaltete komplexe Anbringung von Auszugshalterungen der bisher bekannten Prüfgeräte ist mit der Prüfvorrichtung 10 gemäß der Erfindung nicht mehr erforderlich. Durch einfaches Einhängen, Einsetzen oder seitliches Ansetzen der Prüfhalterungen 8 am distalen Ende D des stangenförmigen Zugelements 1 lässt sich die Vorrichtung durch den Nutzer für die Kraftübertragung ansetzen und direkt mit dem Abstützen am Abstützpunkt 7 durch das stangenförmige Stützelement 3 seitlich von dem Befestigungselement 2 die Prüfung vornehmen.

Eine Prüfung kann mit der erfindungsgemäßen Vorrichtung 10 sowohl direkt am Befestigungselement 2 selbst als auch an angebrachten Anschlusselementen wie Deckenabhängungen 20 sicher und effektiv ausgeführt werden. Für eine durch Einhängen lösbare Kopplung am Befestigungselement 2 selbst kann z. B. eine gabelförmige Prüfhalterung 8 vorgesehen sein, die an einer in einem Dübel eingeschraubten Schraube angreifen kann. Wenn die Vorrichtung 10 gemäß der Erfindung mit elektronischen Messeinheiten 4 und entsprechenden Datenschreibern oder Protokollschreibern elektronisch gekoppelt ist, kann auch eine Aufzeichnung der jeweiligen gemessenen Prüfstelle von Befestigungselementen 2 leicht erfolgen. So können beispielsweise für die vorgenommenen Überprüfungen elektronische Protokolle entsprechend den jeweiligen Punkten der Befestigungselemente 2 für einen Raum oder ein ganzes Gebäude erstellt werden. Auch lässt sich in Kombination mit einem GPS-gesteuerten oder andersartigen Positionierungselement noch weiter die Protokollierung verbessern. Eine elektrifizierte Ausführung kann auch zur elektrisch gesteuerten Farbmarkierung der jeweiligen Prüfstelle verwendet werden. Auch lassen sich so beispielsweise digitale Überprüfungen und Protokollierungen der Systeme des Innenausbaus von gesamten Deckenabhängungen leicht durchführen, die dann für die bautechnischen, statischen und prüfungstechnischen Zwecke weiterverarbeitet und gespeichert werden können.

Schließlich kann die Vorrichtung 10 auch elektrisch mit Kabelanschluss oder ohne Kabel mit einem Akku für die Messeinheit 4 und/oder die Markierungsmittel 11 ausgeführt werden. Bei einer vollständig elektrischen Ausführung der Vorrichtung 10 ist auch vorzugsweise eine Form mit nur einem stangenförmigen Element und kombinierter Einheit für Zug- und Stützelement 1, 3 möglich. Es können sowohl federbasierte mechanische Messeinheiten 4 als auch rein elektrische Kraftsensoren eingesetzt werden. Die Messergebnisse der Prüfung der Auszugsfestigkeit können direkt online zur Verarbeitung weitergegeben werden, sowohl was die Festigkeitswerte betrifft als auch hinsichtlich Ortsparametern, beispielsweise über GPS-Systeme.

## Patentansprüche

1. Vorrichtung (10) zum Prüfen einer Auszugsfestigkeit von Befestigungselementen (2), insbesondere von Dübeln für Deckenabhängungen (20) von Gebäuden oder ähnlichem, mit einem Zugelement (1) zur lösbaren Anbringung auf Seiten der Abhängung (20) oder des Befestigungselements (2) und mit einem Stützelement (3) zur Abstützung an einer Decke (30), Wand oder Boden eines Gebäudes, wobei das Zugelement (1) und das Stützelement (3) in einer Auszugsrichtung F des Befestigungselements (2) relativ verstellbar zueinander gekoppelt sind und eine Messeinheit (4) zum Messen einer Zugkraft auf das Befestigungselement (2) anbringbar oder vorgesehen ist, **dadurch gekennzeichnet, dass** das Zugelement (1) und das Stützelement (3) in Form von mindestens einem stangenförmigen Element mit einer Längsrichtung parallel zur Auszugsrichtung F und mit einem im Bereich des Befestigungselements (2) angeordneten distalen Ende D und einem dazu gegenüberliegenden proximalen Ende P vorgesehen sind, dass am distalen Ende D eine aufsteckbare Prüfhalterung (8) und eine einpunktförmige Abstützung (7) vorgesehen sind, dass am proximalen Ende P ein Auslöseelement für eine vom Befestigungselement (2) entfernte Prüfung durch einen Nutzer vorhanden ist und dass das Zugelement (1) und das Stützelement (3) parallel nebeneinanderliegend verlaufende stangenförmige Elemente mit einer Längsrichtung parallel zur Auszugsrichtung F und mit einem distalen D und einem proximalen Ende P sind und dass am proximalen Ende P ein jeweils gelenkig angebrachter Umlenkbügel (5) quer zur Längsrichtung der stangenförmigen Elemente (1, 3) mit einem Anschluss oder Adapter (6) für die Messeinheit (4) oder einem Betätigungshebel für die vom Befestigungselement (2) entfernte Prüfung durch den Nutzer vorgesehen ist.

2. Vorrichtung (10) nach Anspruch 1, **dadurch gekennzeichnet, dass** am distalen Ende des Stützelements (3) eine einpunktförmige Abstützung (7) in Form von vorzugsweise einem in der Länge einstellbaren Bolzen vorgesehen ist.

3. Vorrichtung (10) nach einem der vorangegangenen Ansprüche, **dadurch gekennzeichnet, dass** das Zugelement (1) am distalen Ende eine ohne separate Befestigungsmittel anbringbare oder aufsteckbare Prüfhalterung (8), insbesondere in Form eines Prüfbügels oder Prüfbolzens, aufweist.

4. Vorrichtung (10) nach einem der Ansprüche 1 bis 3, **dadurch gekennzeichnet, dass** die stangenförmigen Elemente (1, 3) zwischen dem distalen Ende D und dem proximalen Ende P über Gleitführungen (9) miteinander längsbeweglich verbunden sind.

5. Vorrichtung (10) nach einem der vorangegangenen Ansprüche, **dadurch gekennzeichnet, dass** als Meseinheit (4) ein Drehmomentschlüssel oder eine Federwaage mit einem Anschluss für eine lösbare Anbringung insbesondere am Umlenkbügel (5) oder am Adapter (6) vorgesehen ist.

6. Vorrichtung (10) nach einem der vorangegangenen Ansprüche, **dadurch gekennzeichnet, dass** das Zugelement (1) und/oder das Stützelement (3) in der Länge L einstellbar ausgebildet sind/ist.

7. Vorrichtung (10) nach einem der Ansprüche 3 bis 6, **dadurch gekennzeichnet, dass** als Prüfhalterung (8) oder Prüfadapter eine zur Außenseite hin seitlich offene C-förmige Aufnahme vorgesehen ist.

8. Vorrichtung (10) nach einem der vorangegangenen Ansprüche, **dadurch gekennzeichnet, dass** am distalen Ende D des Stützelements (3) ein Markierungsmittel (11) für eine Anbringung einer Prüfmarkierung an der Decke (30) oder Wand vorgesehen ist, welches insbesondere vom proximalen Ende P her nach erfolgter positiver Prüfung vom Benutzer betätigbar ist.

9. Vorrichtung (10) nach einem der vorangegangenen Ansprüche, **dadurch gekennzeichnet, dass** die Messeinheit (4) direkt integriert oder indirekt über den Adapter (6) lösbar gekoppelt vorgesehen ist.

10. Vorrichtung (10) nach einem der vorangegangenen Ansprüche 1 bis 8, **dadurch gekennzeichnet, dass** die Messeinheit (4) im Bereich des distalen Endes D integriert am Stützelement (3) vorgesehen ist.

11. Vorrichtung (10) nach einem der Ansprüche 1 bis 10, **dadurch gekennzeichnet, dass** das Zugelement (1) und das Stützelement (3) als eine elektrisch aktivierbare kombinierte Einheit realisiert sind.

## Claims

1. Device (10) for testing the pull-out resistance of fastening elements (2), in particular of dowels for ceiling suspensions (20) of buildings or the like, with a tension element (1) for releasable attachment on the side of the suspension (20) or the fastening element (2) and with a supporting element (3) for support on a ceiling (30), wall or floor of a building, wherein the tension element (1) and the supporting element (3) are coupled in a manner such that they can be adjusted relative to one another in a pull-out direction F of the fastening element (2), and having a measuring unit (4) for measuring a tensile force that can be attached or provided on the fastening element (2), **characterised in that** the tension element (1) and the supporting element (3) are provided in the form of at least one rod-shaped element with a longitudinal direction parallel to the pull-out direction F and with a distal end D arranged in the region of the fastening element (2) and a proximal end P opposite thereto, **in that** a push-on test holder (8) and a single-point support (7) are provided at the distal end D, **in that** a triggering element for testing by a user away from the fastening element (2) is present at the proximal end P, and **in that** the tension element (1) and the supporting element (3) are rod-shaped elements running parallel to one another, with a longitudinal direction parallel to the pull-out direction F and with a distal D and a proximal end P, and **in that** a deflecting bracket (5), which is in each case attached in an articulated manner transversely to the longitudinal direction of the rod-shaped elements (1, 3), is provided at the proximal end P, with a connection or adapter (6) for the measuring unit (4) or an actuating lever for testing by the user away from the fastening element (2).

2. Device (10) according to claim 1, **characterised in that** a single-point support (7) in the form of preferably a length-adjustable bolt is provided at the distal end of the supporting element (3).

3. Device (10) according to any of the preceding claims, **characterised in that** the tension element (1) has at the distal end a test holder (8), in particular in the form of a test bracket or test bolt, which can be attached or pushed on without separate fastening means.

4. Device (10) according to any of claims 1 to 3, **characterised in that** the rod-shaped elements (1, 3) are connected to one another in a longitudinally movable manner between the distal end D and the proximal end P via sliding guides (9).

5. Device (10) according to any of the preceding claims, **characterised in that** a torque wrench or a spring balance with a connection for releasable attachment, in particular to the deflection bracket (5) or to the adapter (6), is provided as the measuring unit (4).

6. Device (10) according to any of the preceding claims, **characterised in that** the tension element (1) and/or the support element (3) are/is designed to be adjustable in length L.

7. Device (10) according to any of claims 3 to 6, **characterised in that** a C-shaped receptacle that is laterally open toward the outside is provided as the test holder (8) or test adapter.

8. Device (10) according to any of the preceding claims, **characterised in that** a marking means (11) for attaching a test marking to the ceiling (30) or wall is provided at the distal end D of the supporting element (3), which marking means can be actuated by the user in particular from the proximal end P after a positive test has been carried out.

9. Device (10) according to any of the preceding claims, **characterised in that** the measuring unit (4) is provided directly integrated or indirectly releasably coupled via the adapter (6).

10. Device (10) according to any of the preceding claims 1 to 8, **characterised in that** the measuring unit (4) is provided integrated on the supporting element (3) in the region of the distal end D.

11. Device (10) according to any of claims 1 to 10, **characterised in that** the tension element (1) and the supporting element (3) are implemented as an electrically activatable combined unit.

## Revendications

1. Dispositif (10) destiné à contrôler la résistance à l'arrachement d'éléments de fixation (2), en particulier de chevilles pour des suspensions de plafond (20) de bâtiments ou similaires, comprenant un élément de traction (1) destiné à être fixé de manière amovible du côté de la suspension (20) ou de l'élément de fixation (2) et un élément d'appui (3) destiné à s'appuyer contre un plafond (30), un mur ou un sol d'un bâtiment, l'élément de traction (1) et l'élément d'appui (3) étant couplés de manière à pouvoir être déplacés l'un par rapport à l'autre dans une direction d'arrachement F de l'élément de fixation (2), et une unité de mesure (4) pouvant être montée ou étant prévue pour mesurer une force de traction exercée sur l'élément de fixation (2), **caractérisé en ce que** l'élément de traction (1) et l'élément d'appui (3) sont prévus sous la forme d'au moins un élément en forme de tige dont la direction longitudinale est parallèle à la direction d'arrachement F et qui comporte une extrémité distale D disposée dans la zone de l'élément de fixation (2) et une extrémité proximale P opposée à celle-ci, **en ce qu'**à l'extrémité distale D sont prévus un support d'essai enfichable (8) et un appui ponctuel (7), **en ce qu'**un élément de déclenchement est présent à l'extrémité proximale P pour permettre à un utilisateur d'effectuer un essai à distance de l'élément de fixation (2), et **en ce que** l'élément de traction (1) et l'élément d'appui (3) sont des éléments en forme de tige s'étendant parallèlement l'un à côté de l'autre, avec une direction longitudinale parallèle à la direction d'arrachement F et avec une extrémité distale D et une extrémité proximale P, et qu'à l'extrémité proximale **P,** un étrier de renvoi (5) respectivement monté de manière articulée est prévu transversalement à la direction longitudinale des éléments en forme de tige (1, 3), avec un raccord ou un adaptateur (6) pour l'unité de mesure (4) ou un levier d'actionnement pour l'essai par l'utilisateur à distance de l'élément de fixation (2).

2. Dispositif (10) selon la revendication 1, **caractérisé en ce qu'**à l'extrémité distale de l'élément d'appui (3) est prévu un appui ponctuel (7) sous forme d'un boulon de préférence réglable en longueur.

3. Dispositif (10) selon l'une des revendications précédentes, **caractérisé en ce que** l'élément de traction (1) comporte, à son extrémité distale, un support d'essai (8) pouvant être monté ou emboîté sans moyen de fixation séparé, notamment sous la forme d'un étrier d'essai ou d'un boulon d'essai.

4. Dispositif (10) selon l'une des revendications 1 à 3, **caractérisé en ce que** les éléments en forme de tige (1, 3) sont reliés entre eux de manière mobile longitudinalement entre l'extrémité distale D et l'extrémité proximale P par l'intermédiaire de glissières (9).

5. Dispositif (10) selon l'une des revendications précédentes, **caractérisé en ce qu'**il est prévu, comme unité de mesure (4), une clé dynamométrique ou un dynamomètre à ressort avec un raccord pour une fixation amovible, en particulier sur l'étrier de renvoi (5) ou sur l'adaptateur (6).

6. Dispositif (10) selon l'une des revendications précédentes, **caractérisé en ce que** l'élément de traction (1) et/ou l'élément d'appui (3) est/sont réalisé(s) de manière réglable(s) en longueur L

7. Dispositif (10) selon l'une des revendications 3 à 6, **caractérisé en ce qu'**il est prévu, comme support d'essai (8) ou adaptateur d'essai, un logement en forme de C ouvert latéralement vers l'extérieur.

8. Dispositif (10) selon l'une des revendications précédentes, **caractérisé en ce qu'**un moyen de marquage (11) est prévu à l'extrémité distale D de l'élément d'appui (3) pour l'apposition d'un marquage d'essai sur le plafond (30) ou le mur, lequel peut notamment être actionné par l'utilisateur depuis l'extrémité proximale P une fois un essai positif effectué.

9. Dispositif (10) selon l'une des revendications précédentes, **caractérisé en ce que** l'unité de mesure (4) est prévue directement intégrée ou couplée de manière amovible indirectement via l'adaptateur (6).

10. Dispositif (10) selon l'une des revendications 1 à 8, **caractérisé en ce que** l'unité de mesure (4) est prévue intégrée à l'élément d'appui (3) dans la zone de l'extrémité distale D.

11. Dispositif (10) selon l'une des revendications 1 à 10, **caractérisé en ce que** l'élément de traction (1) et l'élément d'appui (3) sont réalisés sous la forme d'une unité combinée à activation électrique.
